# EUROPEAN PATENT APPLICATION

(11) **EP 4 324 884 A1**
(43) Date of publication of application: **21.02.2024**
(21) Application number: 22306241.5
(22) Date of filing: 19.08.2022
(51) Int. Cl.: C08L 95/00

(54) **BITUMEN/POLYMER COMPOSITION WITH IMPROVED MECHANICAL PROPERTIES**

(71) Applicant: TotalEnergies OneTech, 92400 Courbevoie (FR)
(72) Inventor: HAIGH, Rebecca, 69360 SOLAIZE CEDEX (FR); KALEEM, Zain, 69360 SOLAIZE CEDEX (FR)
(74) Representative: Lavoix

(57) **Abstract**

A bituminous composition comprising a bitumen modified by a crosslinked elastomer, said elastomer being chosen from aromatic vinyl hydrocarbon and conjugated diene block copolymers having a vinyl aromatic hydrocarbon content, as determined by ¹³C NMR spectroscopy, inferior or equal to 25% by mass, with respect to the total mass of the elastomer.

## Description

### Technical field

The present invention belongs to the technical field of bitumens. More particularly, the invention relates to crosslinked polymer modified compositions with improved mechanical properties.

### Background

Bitumen or bituminous binder is the main hydrocarbon binder used in the fields of road construction and civil engineering. In order to be able to be used as binder in these different applications, the bitumen has to exhibit certain physicochemical and mechanical properties. It must notably be sufficiently hard and have a good consistency at the temperatures of use to avoid, for example, the formation of ruts caused by traffic. Bitumen must also be elastic in order to resist deformations imposed by the traffic and/or temperature changes, these phenomena leading to cracking of the bituminous mixes and/or to stripping of the surface aggregates. Lastly, bitumen must be sufficiently fluid at application temperatures, which are as low as possible in order to enable, for example, good coating of the aggregates and laying of the bituminous mix on the road. The use of a bituminous binder thus requires the combination of hardness, consistency and elasticity of the bitumen at the temperatures of use with a low viscosity at the working and application temperatures.

As bitumen alone is generally not elastic enough, polymers, which may optionally be crosslinked, are added to the bitumen (see for instance US 2021/0047514 and prior art mentioned in this document). These crosslinked polymers provide bituminous compositions with markedly improved elastic properties.

Depending on the applications targeted, it is necessary to find a good compromise between the mechanical properties, including the elasticity, the hardness, the consistency, the fluidity and the viscosity, in particular the hot viscosity of the binder.

Another problem in the use of bitumen is associated with its transportation, handling and storage. Generally, bitumen is stored and transported hot, in bulk, in tanker trucks or by boats at high temperatures of about 120° C to 180° C. However, the storage and transport of hot bitumen once mixed with aggregates to form an asphalt mixt presents certain drawbacks. This mode of transportation does not present particular difficulties when the transportation equipment and infrastructures are in good condition. However, if the asphalt truck is not sufficiently and homogeneously thermally insulated, the viscosity of the bitumen within the asphalt may locally increase during an excessively long trip. In particular, it happens that the temperature in the corners of the asphalt truck is significantly lower than the temperature in the rest of the asphalt. The asphalt located in the corners then starts cooling, resulting in a local increase of the viscosity of the bitumen. On arrival at the paving site, the asphalt is dropped directly into an asphalt paver. Most of the asphalt (still sufficiently fluid because still sufficiently hot) flows freely while the "cold" asphalt previously located in the corners forms lumps. These lumps have to be break up mechanically, before going through the paver. Indeed, if the lumps are not broken up before going through the paver, they can cause dragging of the material, which is problematic for road applications. This irreversible phenomenon is called "*clumping*".

There is a need to provide bitumen polymer compositions that, when mixed with aggregates to form an asphalt mix, may be transported hot, in bulk, with clumping risk significantly reduced. In particular, there is a need to provide bitumen polymer compositions that, when mixed with aggregates to form an asphalt mix, may be transported hot, in bulk, without forming lumps when the temperature in the asphalt truck is not perfectly homogenous.

More particularly, there is a need to provide bitumen polymer composition whose risk of clumping, when incorporated in an asphalt mix, is significantly reduced, while maintaining good mechanical performances, including the elasticity, the hardness, the consistency, the fluidity and the viscosity.

There is also a need to provide bitumen polymer compositions, which are not subject to gelling when stored, notably as concentrates.

The applicant has now discovered that the selection of a specific elastomer chosen from aromatic vinyl hydrocarbon and conjugated diene block copolymers having a vinyl aromatic hydrocarbon content, as determined by ¹³C NMR spectroscopy, inferior or equal to 25% by mass, with respect to the total mass of the elastomer, permit to overcome the drawbacks defined above.

In particular, the crosslinked bitumen/polymer compositions according to the invention are not subject to clumping issues. Moreover, the compositions according to the invention have good mechanical properties and are stable during storage.

### Summary of the invention

The invention relates to a bituminous composition comprising a bitumen modified by a crosslinked elastomer, said elastomer being chosen from aromatic vinyl hydrocarbon and conjugated diene block copolymers having a vinyl aromatic hydrocarbon content, as determined by 13C NMR spectroscopy, inferior or equal to 25% by mass, with respect to the total mass of the elastomer.

Preferably, the bituminous composition comprises from 70% to 99.5% by weight of bitumen, preferably from 75% to 99% by weight, more preferably from 80% to 98%, even more preferably from 85% to 95% by weight, with respect to the total weight of the bituminous composition.

Advantageously, the elastomer is chosen from aromatic monovinyl hydrocarbon and conjugated diene block copolymers, preferably from styrene and butadiene copolymers.

More advantageously, the elastomer is chosen from styrene and butadiene triblock copolymers, more preferably from styrene and butadiene radial triblock copolymers.

Preferably, the elastomer represents from 0.5 to 20 % by weight, more preferentially from 1 to 15 % by weight, more preferentially from 2 to 10 % by weight, and more preferentially from 2,5 to 7,5 % by weight, of said bitumen/polymer composition.

According to a preferred embodiment, the elastomer has a monovinyl aromatic hydrocarbon content, as determined by 13C NMR spectroscopy, superior or equal to 5% by mass, preferably ranging from 10% to 25% by weight, more preferably from 20% to 25 % by mass, with respect to the total mass of the elastomer.

Preferably, the elastomer is sulphur-crosslinked and the bituminous composition according to the invention has Sulphur content ranging from 0.06 % to 0.14% by weight, with respect to the total weight of the bituminous composition, preferably from 0.08 % to 0.12% by weight.

According to a particular embodiment, the bituminous composition further comprises an olefinic polymer functionalized by at least one epoxy group, which, in particular, represents from 0.05% to 2.5% by weight, preferentially from 0.15% to 2% by weight, more preferentially still from 0.4% to 1% by weight, more preferentially still from 0.4% to 0.8% by weight, said olefinic polymer being preferentially selected from the group consisting of (a) ethylene/glycidyl (meth)acrylate copolymers; (b) ethylene/monomer A/monomer C terpolymers and (c) the mixtures of these copolymers ; in particular, the olefinic polymer is chosen from the groups (a), (b) and (c) consisting of:
(a) the copolymers of ethylene and glycidyl (meth) acrylate chosen from, preferably random copolymers, of ethylene and of a monomer selected from glycidyl acrylate and glycidyl methacrylate, comprising from 50 % to 99.7 % by weight, preferably from 60 % to 95 % by weight, more preferably from 60 % to 90 % by weight of ethylene ;
(b) the terpolymers, preferably random terpolymers, of ethylene, of a monomer A and of a monomer C chosen from random and block terpolymers; the monomer A being, preferentially, selected from vinyl acetate, (C1-C6)alkylacrylates and methacrylates and the monomer C being selected from glycidylacrylate and glycidylmethacrylate; in particular, the terpolymers ethylene/monomer A/monomer C comprise from 0.5 % to 40 % by weight, preferably from 5 to 35 % by weight, more preferably from 10 % to 30 % by weight of units resulting from monomer A and from 2.5 % to 15 % by weight of units resulting from monomer C, the rest being formed by units derived from the ethylene ;
(c) a mixture of two or more copolymers chosen from the categories (a) and (b).

Advantageously, the bituminous composition is stable after at least 7 days of storage at 180°C, preferably after 28 days of storage at 180°C.

The invention also related to a method for preparing a bituminous composition as defined above and as described in details hereafter, said method comprising contacting between 120° C and 220°C: at least one bitumen, at least one aromatic monovinyl hydrocarbon and conjugated diene block copolymers, which has a monovinyl aromatic hydrocarbon content, as determined by 13C NMR spectroscopy, inferior or equal to 25% by mass, for a period of 30 minutes to 48 hours.

Preferably, the operation is carried out at a temperature ranging from 160°C to 195°C.

The invention also concerns an asphalt comprising a bituminous composition as defined above and as described in details hereafter, and inorganic and/or synthetic fillers.

The invention finally related to a bituminous mix comprising a bituminous composition as defined above and as described in details hereafter, aggregates and optionally inorganic and/or synthetic fillers.

### Detailed description

The applicant has discovered that the use of a specific elastomer for the preparation of bitumen/polymer compositions makes it possible to improve the mechanical properties, notably the rutting resistance, of the bitumen/polymer compositions, while preventing gelling of the compositions during storage.

The expression "crosslinked elastomer/bitumen" or "bitumen modified by a crosslinked elastomer" denotes the result from the crosslinking treatment of a mixture comprising at least the bitumen and the crosslinkable elastomer. The elastomer itself is crosslinked and there may also exist crosslinkings between the elastomer and the bitumen.

Unless specified otherwise, the cited European standards are the standards in force on 1st May 2022.

### Bitumen

The bituminous composition according to the invention comprises bitumen as its principal constituent.

A bitumen can be any bitumen, as known in the art. The bituminous composition can comprise one or more bitumen. The bitumen that can be used in the invention includes the bitumen of natural origin, those contained in natural deposits of bitumen, natural asphalt or tar sands and the bitumen obtained from the refining of crude oil. The bitumen used in the bituminous composition is advantageously chosen from the bitumen from the refining of crude oil, particularly from the bitumen containing asphaltenes. The bitumen may be obtained by conventional methods of bitumen manufacturing in a refinery, in particular by direct distillation and/or vacuum distillation of oil.

It is, in particular, standard to carry out the vacuum distillation of the atmospheric residues originating from the atmospheric distillation of crude oil. This manufacturing process consequently corresponds to the sequence of an atmospheric distillation and of a vacuum distillation, the feedstock feeding of the vacuum distillation corresponding to the atmospheric residue. The vacuum residues resulting from the vacuum distillation tower can be used as bitumen. In addition, these residues can optionally be subjected to other treatments in order to modify their mechanical properties, in particular their consistency. The bitumen may be optionally visbroken and/or deasphalted and/or air rectified. The visbreaking corresponds to a conversion process which employs thermal cracking reactions without supplying hydrogen.

The different bitumen obtained by the refining processes can be combined to achieve the best technical compromise in the bituminous composition.

The bitumen may also be a recycled bitumen or an oxidized bitumen.

The bitumen can be selected from bitumen fulfilling one of the following European standards EN 12591, EN 13924-1 (hard grade) or EN 13924-2 (multigrade).

In particular, the bituminous composition contains one or more bitumen chosen among paving grade bitumen as defined by EN 12591 (2009 version). The bitumen can be a bitumen of hard or soft grade. For road application, the bitumen is advantageously chosen from bitumen of grades 10/20 to 160/220, for instance of grades 20/30, 30/45, 35/50, 40/60, 50/70, 70/100, 100/150 and 160/220 and from hard grade bitumen as defined in EN 13924-1.

Advantageously, the bitumen has a penetrability, measured at 25 °C according to EN 1426, between 1 and 300 1/10 mm, preferably between 10 and 150 1/10 mm, more preferably between 50 and 100 1/10 mm.

Advantageously, the bitumen has a ring and ball softening temperature, measured according to EN 1427, preferably less than or equal to 90°C, preferably between 30°C and 90°C, more preferably between 35°C and 50°C.

Advantageously, the bituminous composition according to the invention comprises from 70% to 99.5% by weight of bitumen, preferably from 75% to 99% by weight, more preferably from 80% to 98%, even more preferably from 85% to 95% by weight, with respect to the total weight of the bituminous composition.

According to a first embodiment, the bituminous composition according to the invention is in the form of a concentrate that has to be diluted with bitumen before being applied.

Preferably, the concentrate composition comprises from 90.0 % to 99.0 % by weight of bitumen, preferably from 91.0 % to 97.5 % by weight, more preferably from 92.0 % to 96.0 %, even more preferably from 93.0 % to 94.2 % by weight, with respect.

According to a second embodiment, the bituminous composition is ready to be applied

Preferably, according to this second embodiment, the bituminous composition comprises from 90.0% to 99.0 % by weight of bitumen, preferably from 91.5 % to 99.0 % by weight, more preferably from 93.0% to 99.0%, even more preferably from 94.0 % to 99.0 % by weight, with respect.

### The elastomer

The bituminous composition includes a bitumen modified by a crosslinked elastomer. Such bitumen modified by a crosslinked elastomer may correspond to a "polymer modified bitumen" fulfilling the European standards EN 14023. The use of a crosslinked elastomer in a bitumen was previously described, in order to improve the elasticity behaviour of the obtained bituminous composition (see for instance US 2021/0047514 and prior art mentioned in this document).

The crosslinking of the elastomer is carried out in situ, after the incorporation of a crosslinkable elastomer in a bitumen, said bitumen can include other additive(s). So, the bitumen modified by a crosslinked elastomer is obtained by the inclusion into the bitumen of a crosslinkable elastomer, in some embodiments with also the inclusion of a crosslinking agent, followed by a crosslinking step of the crosslinkable elastomer leading to the crosslinked elastomer and so to the bitumen modified by a crosslinked elastomer.

In the context of the invention, the crosslinkable elastomer is chosen from copolymers of an aromatic vinyl hydrocarbon (in particular aromatic monovinyl hydrocarbon) and a conjugated diene, in particular styrene and butadiene copolymers.

The monovinylaromatic hydrocarbon monomers of the copolymer may be independently any monovinylaromatic hydrocarbon known monomers, such as: styrene, o-methylstyrene, p-methylstyrene, p-tert-butylstyrene, 2,4-dimethylstyrene, alphamethylstyrene, vinylnaphthalene, vinyltoluene and vinylxylene or mixtures thereof.

Preferably, the monovinyl aromatic hydrocarbon monomer is styrene, which may be used as a substantially pure monomer or as the major component in mixtures with minor proportions of one or more other structurally related vinyl aromatic monomers, such as o-methylstyrene, p-methylstyrene, p-tert-butylstyrene, 2,4-dimethylstyrene, alphamethylstyrene, vinylnaphthalene, vinyltoluene and vinylxylene.

Advantageously, the crosslinkable elastomer has a weight-average molecular weight Mw, measured by conventional detection gel permeation chromatography with polystyrene standard, ranging from 40,000 to 500,000 g/mol.

A particularly suitable crosslinkable elastomer is a copolymer comprising at least one block obtained by polymerization of monovinylaromatic hydrocarbon monomers (typically styrene), denoted S, and at least one block obtained by polymerization of butadiene, denoted B.

Advantageously, styrene is used alone or in a mixture with at most 10% by weight of one or more other vinyl aromatic monomers, based on the total weight of the monomers of the S block(s) of the elastomer. The use of substantially pure styrene is particularly preferred.

Preferably, each block B is based on substantially pure butadiene monomers or comprising minor proportions, up to 10% by weight, of structurally related conjugated dienes. Preferably, blocks B are exclusively made up of units derived from butadiene monomers.

The content of monovinyl aromatic hydrocarbon (advantageously styrene) in the copolymer, as determined by 13C NMR spectroscopy, is typically inferior or equal to 25% by weight, based on the total weight of the copolymer.

Preferably, content of monovinyl aromatic hydrocarbon (advantageously styrene) in the copolymer, as determined by 13C NMR spectroscopy, is superior or equal to 5% by mass, preferably ranging from 10% to 25% by weight, more preferably from 20% to 25 % by mass, with respect to the total mass of the copolymer.

Advantageously, the crosslinkable copolymer is chosen from triblock copolymers.

More advantageously, the crosslinkable copolymer is chosen SBS copolymers, wherein each S represents a block obtained by polymerization of monovinylaromatic hydrocarbon monomers (typically styrene), and B represents a block obtained by polymerization of butadiene.

According to a preferred embodiment, the crosslinkable elastomer is chosen from radial copolymers, preferably from radial triblock copolymers.

Advantageously, the crosslinkable elastomer is chosen from radial triblock styrene and butadiene copolymers.

Advantageously, the copolymer is essentially in a non-hydrogenated form.

The D1116 A polymer marketed by KRATON is an example of such kind of crosslinkable elastomers.

Advantageously, the bituminous composition according to the invention comprises from 0.5 to 20 % by weight of elastomer, more preferentially from 1 to 15 % by weight, more preferentially from 2 to 10 % by weight, and more preferentially from 2.5 to 7.5 % by weight, of said bitumen/polymer composition.

Preferably, when the bituminous composition is in the form of a concentrate, its comprises from 1.0% to 10.0 % by weight of elastomer, preferably from 9.0 % to 2.5% by weight, more preferably from 4.0 % to 8.0%, even more preferably from 5.8% to 6.8 % by weight, with respect.

Preferably, the final bituminous composition, ready to be applied, comprises from 1.0% to 10.0 % by weight of elastomer, preferably from 1.0 % to 8.5 % by weight, more preferably from 1.0 % to 7.0 %, even more preferably from 1.0 % to 6.0 % by weight, with respect.

The bituminous composition according to the invention comprises at least one crosslinked elastomer resulting from the crosslinking of a crosslinkable elastomer as defined above and described in details hereafter.

### Crosslinking of the elastomer

The crosslinking of the aromatic monovinyl hydrocarbon and conjugated diene, in particular styrene and butadiene, copolymer in the crosslinked bitumen/polymer composition, is achieved thanks to the use of an aromatic monovinyl hydrocarbon and conjugated diene, in particular styrene and butadiene, copolymer as defined above and a crosslinking agent, or thanks to the use of an aromatic monovinyl hydrocarbon and conjugated diene, in particular styrene and butadiene, copolymer having a particular quantity of 1,2 double bond units originating from the conjugated diene, in particular butadiene, this quantity of 1,2 double bond units originating from the conjugated diene, in particular butadiene, being comprised between 5% and 50% by mass, with respect to the total mass of the conjugated diene, in particular butadiene, units preferably between 10% and 40%, more preferentially between 15% and 30%, even more preferentially between 18% and 25%, even more preferentially between 18% and 23% or between 20% and 25%, or also thanks to the use of said aromatic monovinyl hydrocarbon and conjugated diene, in particular styrene and butadiene, copolymer, having the particular quantity defined above of 1,2 double bond units originating from the conjugated diene, in particular from the butadiene, in combination with a cross-linking agent.

Preferably, the crosslinking agent is chosen from sulphur and the hydrocarbyl polysulphides, alone or in a mixture, optionally in the presence of sulphur-donor or non-sulphur-donor vulcanization accelerators, alone or in a mixture. The sulphur is in particular flowers of sulphur or also alpha crystallized sulphur. The hydrocarbyl polysulphides are for example chosen from the dihexyl disulphides, dioctyl disulphides, didodecyl disulphides, ditertiododecyl disulphides, dihexadecyl disulphides, dihexyl trisulphides, dioctyl trisulphides, dinonyl trisulphides, ditertiododecyl trisulphides, dihexadecyl trisulphides, diphenyl trisulphides, dibenzyl trisulphides, dihexyl tetrasulphides, dioctyl tetrasulphides, dinonyl tetrasulphides, ditertiododecyl tetrasulphides, dihexadecyl tetrasulphides, diphenyl tetrasulphides, orthotolyl tetrasulphides, dibenzyl tetrasulphides, dihexyl pentasuiphides, dioctyl pentasulphides, dinonyl pentasulphides, ditertiododecyl pentasulphides, dihexadecyl pentasuiphides, dibenzyl pentasulphides or diallyl pentasulphides.

The sulphur-donor vulcanization accelerators can be chosen from the thiuram polysulphides, such as for example, the tetrabutylthiuram disulphides, tetraethylthiuram disulphides and tetramethylthiuram disulphides, dipentamethylenethiuram disulphides, dipentamethylenethiuram tetrasulphides or dipentamethylenethiuram hexasulphides.

The non-sulphur-donor vulcanization accelerators which can be used according to the invention can be chosen in particular from mercaptobenzothiazole and its derivatives, dithiocarbamates and derivatives, and thiuram monosulphides and derivatives, alone or in a mixture. There may be mentioned as examples of non-sulphur-donor vulcanization accelerators, zinc 2-mercaptobenzothiazole, zinc benzothiazole thiolate, sodium benzothiazole thiolate, benzothiazyl disulphide, copper benzothiazole thiolate, benzothiazyl N,N'-diethyl thiocarbamyl sulphide and benzothiazole suiphenamides such as 2-benzothiazole diethyl sulphenamide, 2-benzothiazole pentamethylene sulphenamide, 2-benzothiazole cyclohexyl sulphenamide, N-oxydiethylene 2-benzothiazole sulphenamide, N-oxydiethylene 2-benzothiazole thiosulphenamide, 2-benzothiazole dicyclohexyl sulphenamide, 2-benzothiazole diisopropyl sulphenamide, 2-benzothiazole tertiobutyl sulphenamide, bismuth dimethyl dithiocarbamate, cadmium diamyl dithiocarbamate, cadmium diethyl dithiocarbamate, copper dimethyl dithiocarbamate, lead diamyl dithiocarbamate, lead dimethyl dithiocarbamate, lead pentamethylene dithiocarbamate, selenium dimethyl dithiocarbamate, tellurium diethyl dithiocarbamate, zinc diamyl dithiocarbamate, zinc dibenzyl dithiocarbamate, zinc diethyl dithiocarbamate, zinc dimethyl dithiocarbamate, zinc dibutyl dithiocarbamate, zinc pentamethylene dithiocarbamate, dipentamethylene thiuram monosulphide, tetrabutyl thiuram monosulphide, tetraethyl thiuram monosulphide and tetramethyl thiuram monosulphide.

The cross-linking agent can also be chosen from the compounds of general formula HS-R-SH where R represents a saturated or unsaturated, linear or branched hydrocarbon group with 2 to 40 carbon atoms, optionally comprising one or more heteroatoms, such as oxygen. Among the compounds corresponding to this general formula, there can be mentioned for example 1,2 ethanedithiol, 1,3 propanedithiol, 1,4 butanedithiol, 1,5 pentanedithiol, 1,6 hexanedithiol, 1,7 heptanedithiol, 1,8 octanedithiol, bis-(2-mercaptoethyl)ether, bis-(3-mercaptoethyl)ether, bis-(4-mercaptoethyl)ether, (2-mercaptoethyl) (3-mercaptobutyl)ether, (2-mercaptoethyl) (4-mercaptobutyl)ether, 1,8-dimercapto-3,6-dioxaoctane, benzene-1,2-dithiol, benzene-1,3-dithiol, benzene-1,4-dithiol or toluene-3,4-dithiol, biphenyl-4,4'-dithiol.

In general a quantity of crosslinking agent between 0.01% and 5% by mass, with respect to the mass of the bituminous composition, preferably between 0.05% and 2%, more preferentially between 0.1% and 1%, even more preferentially between 0.1% and 0.3% is used.

Advantageously, the quantity of crosslinking agent represents from 0,1% to 5% by weight, with respect to the total weight of the elastomer, preferably from 1% to 5% by weight, more preferably from 1.5% to 4.5% by weight, notably from 2.5% to 3.5% by weight.

The crosslinking of the crosslinked bitumen/polymer compositions can be demonstrated by carrying out on these cross-linked bitumen/polymer compositions tensile tests according to the standard EN 13587. The cross-linked bitumen/polymer compositions have a higher tensile strength than the non-cross-linked bitumen/polymer compositions A higher tensile strength results in a high ultimate elongation or maximum elongation (ε max in %), a high rupture stress or maximum elongation stress (a ε max in MPa), high conventional energy at 400% (E 400% in J/cm²) and/or high total energy (total E in J). The crosslinked bitumen/polymer compositions have a maximum elongation, according to the standard EN 13587, greater than or equal to 400%, preferably greater than or equal to 500%, more preferentially greater than or equal to 600%, even more preferentially greater than or equal to 700%.

### Optional polymers

In addition to this aromatic monovinyl hydrocarbon and conjugated diene, in particular styrene and butadiene, copolymer, the bituminous composition can optionally comprise another type of polymer selected from polybutadienes, polyisoprenes, butyl rubbers, polyacrylates, polymethacrylates, polychloroprenes, polynorbornenes, polybutenes, polyisobutenes, polyethylenes, ethylene and vinyl acetate copolymers, ethylene and methyl acrylate copolymers, ethylene and butyl acrylate copolymers, ethylene and maleic anhydride copolymers, ethylene and glycidyl methacrylate copolymers, ethylene and glycidyl acrylate copolymers, ethylene and propene copolymers, ethylene/propene/diene (EPDM) terpolymers, acrylonitrile/butadiene/styrene (ABS) terpolymers, ethylene/acrylate or alkyl methacrylate/glycidyl acrylate or methacrylate terpolymers and in particular ethylene/methyl acrylate/glycidyl methacrylate terpolymer and ethylene/alkyl acrylate or methacrylate/maleic anhydride terpolymers and in particular ethylene/butyl acrylate/maleic anhydride terpolymer.

According to a particular embodiment, the bituminous composition further comprises at least one olefinic polymer functionalized by at least one epoxy group.

Such kind of olefinic polymer adjuvant may promote to a thermal crosslinking of the crosslinked elastomer polymer, but may be included whatever the chosen crosslinking route.

The olefinic polymer adjuvant functionalized by at least one epoxy group is preferably chosen from the group consisting of (a) ethylene/glycidyl (meth)acrylate copolymers; (b) ethylene/monomer A/monomer C terpolymers and (c) the mixtures of these copolymers.
(a) The ethylene/glycidyl (meth)acrylate copolymers are advantageously chosen from copolymers, preferably random, of ethylene and of a monomer chosen from glycidyl acrylate and glycidyl methacrylate, comprising from 50% to 99.7% by weight, preferably from 60% to 95% by weight, more preferentially from 60% to 90% by weight, of ethylene.
(b) The terpolymers are advantageously chosen from terpolymers, preferably random, of ethylene, of a monomer A and of a monomer C.

The monomer A is chosen from vinyl acetate and C1 to C6 alkyl acrylates or methacrylates, preferably chosen from C1 to C6, more preferentially still C1-C3, alkyl acrylates or methacrylates.

Advantageously, the monomer A is chosen from ethyl acrylate and ethyl methacrylate.

More advantageously still, the monomer A is ethyl acrylate.

The monomer C is chosen from glycidyl acrylate and glycidyl methacrylate.

Advantageously, the monomer C is glycidyl methacrylate.

The ethylene/monomer A/monomer C terpolymers comprise from 0.5% to 40% by weight, preferably from 5% to 35% by weight and more preferentially from 10% to 30% by weight of motifs resulting from the monomer A and from 0.5% to 15% by weight and preferably from 2.5% to 15% by weight of motifs resulting from the monomer C, the remainder being formed of motifs resulting from ethylene.
(c) The olefinic polymer adjuvant functionalized by at least one epoxy group can consist of a mixture of two or more copolymers chosen from the categories (a) and (b).

The olefinic polymer adjuvant functionalized by at least one epoxy group is preferably chosen from the ethylene/monomer A/monomer C terpolymers (b) described above and from the mixtures (c) comprising them.

The olefinic polymer adjuvant functionalized by at least one epoxy group is advantageously chosen from the ethylene/monomer A/monomer C terpolymers (b) described above and from the mixtures (c) in which the terpolymers (b) represent at least 50% by weight, with respect to the total weight of the mixture, preferentially at least 75% by weight, even better still at least 90% by weight.

Advantageously, the olefinic polymer adjuvant functionalized by at least one epoxy group is chosen from random terpolymers of ethylene, of a monomer A chosen from Ci to C6 alkyl acrylates or methacrylates and of a monomer C chosen from glycidyl acrylate and glycidyl methacrylate, comprising from 0.5% to 40% by weight, preferably from 5% to 35% by weight, more preferentially from 10% to 30% by weight, of motifs resulting from the monomer A and from 0.5% to 15% by weight, preferably from 2.5% to 15% by weight, of motifs resulting from the monomer C, the remainder being formed of motifs resulting from ethylene.

Preferably, the number-average molecular weight (Mn) of the olefinic polymer adjuvant functionalized by at least one epoxy group, determined by gel permeation chromatography with a polystyrene standard, ranges from 5000 to 50 000 g/mol, more preferentially from 10 000 to 40 000 g/mol and more preferentially still from 25 000 to 40 000 g/mol.

Preferably, the weight-average molecular weight (Mw) of the olefinic polymer adjuvant functionalized by at least one epoxy group, determined by gel permeation chromatography with a polystyrene standard, ranges from 10 000 to 250 000 g/mol, more preferentially from 50 000 to 200 000 g/mol and more preferentially still from 10 000 to 150 000 g/mol.

The term "monomer unit" is understood to mean, within the meaning of the invention, the largest constituent unit generated by the (co)polymerization of a single molecule of said monomer.

Advantageously, the olefinic polymer adjuvant functionalized by at least one glycidyl group comprises, on average, from 500 to 10 000 ethylene units per macromolecule, preferably from 800 to 5000 ethylene units, more preferentially from 1000 to 4000 ethylene units, more preferentially still from 1200 to 3500 ethylene units and advantageously from 1250 to 3400 ethylene units.

Advantageously, the olefinic polymer adjuvant functionalized by at least one glycidyl group comprises, on average, from 30 to 500 alkyl (meth)acrylate units per macromolecule, preferably from 50 to 400 alkyl (meth)acrylate units, more preferentially from 70 to 300 alkyl (meth)acrylate units, more preferentially still from 90 to 250 alkyl (meth)acrylate units and advantageously from 95 to 200 alkyl (meth)acrylate units.

Advantageously, the olefinic polymer adjuvant functionalized by at least one glycidyl group comprises, on average, from 15 to 200 glycidyl (meth)acrylate units per macromolecule, preferably from 15 to 150 glycidyl (meth)acrylate units, more preferentially from 20 to 125 glycidyl (meth)acrylate units, more preferentially still from 20 to 100 glycidyl (meth)acrylate units and advantageously from 20 to 90 glycidyl (meth)acrylate units.

Preferably, the average weight of the ethylene units present in one mole of olefinic polymer adjuvant functionalized by at least one glycidyl group ranges from 15 000 to 200 000 g, more preferentially from 20 000 to 150 000 g, more preferentially still from 25 000 to 100 000 g, advantageously from 30 000 to 90 000 g and more advantageously from 35 000 to 88 000 g.

Preferably, the average weight of the alkyl (meth)acrylate units present in one mole of olefinic polymer adjuvant functionalized by at least one glycidyl group ranges from 3500 to 50 000 g, more preferentially from 5000 to 25 000 g, more preferentially still from 7500 to 20 000 g and advantageously from 9500 to 19 000 g.

Preferably, the average weight of the glycidyl (meth)acrylate units present in one mole of olefinic polymer adjuvant functionalized by at least one glycidyl group ranges from 1500 to 20 000 g, more preferentially from 2000 to 17 500 g, more preferentially still from 2500 to 15 000 g, advantageously from 2750 to 12 500 g and more advantageously from 2900 to 12 000 g.

If present, the content of olefinic polymer adjuvant functionalized by at least one epoxy group in the bitumen/polymer composition according to the invention is preferably from 0.05% to 2.5% by weight, with respect to the total weight of the composition, more preferentially from 0.15% to 2% by weight, more preferentially still from 0.2% to 1% by weight, more preferentially still from 0.4% to 0.8% by weight.

### Others additives

It is also possible to add, to the bitumen/polymer composition of the invention, in a known way:
a) adhesion agents and/or surface-active agents. They are generally chosen from alkylamine derivatives, alkylpolyamine derivatives, alkylamidopolyamine derivatives and derivatives of quaternary ammonium salts, taken alone or as a mixture. The amount of adhesion agents and/or of surface-active agents in the bitumen/polymer composition is, for example, between 0.2% and 2% by weight, preferably between 0.5% and 1% by weight, with respect to the total weight of the bitumen/polymer composition.
b) waxes of animal or vegetable origin or hydrocarbon waxes, in particular long-chain hydrocarbon waxes, for example polyethylene waxes or paraffins, which are optionally oxidized. Amide waxes, such as ethylene bis(stearamide), can also be added.
c) paraffins exhibiting chain lengths of 30 to 120 carbon atoms (C30 to C120). The paraffins are chosen from polyalkylenes. Preferably, the paraffins are polymethylene paraffins and polyethylene paraffins. These paraffins can be of petroleum origin or can originate from the chemical industry. Preferably, the paraffins are synthetic paraffins resulting from the conversion of biomass and/or natural gas.
d) fluxes, such as oils based on animal and/or vegetable fatty substances or hydrocarbon oils of petroleum origin. The oils of animal and/or vegetable origin can be in the form of free fatty acids, of triglycerides, of diglycerides, of monoglycerides or in the esterified form, for example in the methyl ester form.
e) resins of vegetable origin, such as rosins.
f) antifoam additives, notably (but nonlimitingly) chosen from polysiloxanes, oxyalkylated polysiloxanes and amides of fatty acids resulting from vegetable or animal oils.
g) detergent additives and/or corrosion inhibitors, notably (but nonlimitingly) chosen from the group consisting of amines, succinimides, alkenylsuccinimides, polyalkylamines, polyalkylpolyamines, polyetheramines and imidazolines.
h) slip agents or antiwear agents, notably (but nonlimitingly) chosen from the group consisting of fatty acids and their ester or amide derivatives, notably glyceryl monooleate, and derivatives of mono- and polycyclic carboxylic acids.
i) crystallization-modifying additives, additives which inhibit paraffin deposits, additives which make it possible to lower the pour point; modifiers of the rheology at low temperature, such as ethylene/vinyl acetate (EVA) and/or ethylene/vinyl propionate (EVP) copolymers, ethylene/vinyl acetate/vinyl versatate (EA/AA/EOVA) terpolymers; ethylene/vinyl acetate/alkyl acrylate terpolymers; EVA copolymers modified by grafting; polyacrylates; acrylates/vinyl acetate/maleic anhydride terpolymers; amidated maleic anhydride/alkyl (meth)acrylate copolymers capable of being obtained by reaction of a maleic anhydride/alkyl (meth)acrylate copolymer and of an alkylamine or polyalkylamine having a hydrocarbon chain of 4 to 30 carbon atoms, preferably of 12 to 24 carbon atoms; amidated α-olefin/maleic anhydride copolymers capable of being obtained by reaction of an α-olefin/maleic anhydride copolymer and of an alkylamine or polyalkylamine, it being possible for the α-olefin to be chosen from C10-C50 α-olefins, preferably C16-C20 α-olefins, and the alkylamine or the polyalkylamine advantageously having a hydrocarbon chain of 4 to 30 carbon atoms, preferably of 12 to 24 carbon atoms.
j) antioxidants, for example of hindered phenolic type or of amino type, of alkylated para-phenylenediamine type.
k) metal passivators.
l) acidity neutralizers.
m) additives which make it possible to lower the temperature of mixing of the asphalts and mixes, those making it possible to improve the adhesion of bituminous binders to the fillers and aggregates, such as, for example, polyisobutylenesuccinimides.
n) acids, such as polyphosphoric acid, or diacids, in particular fatty diacids.

The additives are employed following the amounts well known to a person skilled in the art, depending on the nature of the additive, depending on the bitumen base and on the expected properties.

When it comprises one or more additives, the bitumen base comprises from 0.1% to 10% by weight, preferably from 0.5% to 5% by weight, more preferentially from 0.5% to 2.5% by weight, of chemical additive, with respect to the total weight of the bitumen base.

### The bituminous composition

Preferably, the bituminous composition comprises, in particular consists essentially of:
- bitumen,
- one or more crosslinked elastomer as defined above,
- optionally, one or more olefinic polymer adjuvant(s) as defined above, and
- optionally, one or more additive(s) as defined above.

More preferably, the bituminous composition comprises, in particular consists essentially of:
- from 70% to 99.5% by weight of bitumen,
- from 0.5% to 20% by weight of one or more crosslinked elastomer as defined above,
- optionally, from 0.05% to 2.5% by weight of one or more olefinic polymer adjuvant(s) as defined above, and
- optionally, from 0.1% to 10% by weight of one or more additive(s) as defined above,
with respect to the total weight of the bituminous composition.

Advantageously, the bituminous composition comprises, in particular consists essentially of:
- from 75% to 99% by weight of bitumen,
- from 1% to 15% by weight of one or more crosslinked elastomer as defined above,
- optionally, from 0.15 to 2% by weight of one or more olefinic polymer adjuvant(s) as defined above, and
- optionally, from 0.5% to 5% by weight of one or more additive(s) as defined above,
with respect to the total weight of the bituminous composition.

More advantageously, the bituminous composition comprises, in particular consists essentially of:
- from 80% to 98% by weight of bitumen
- from 2% to 10% by weight of one or more crosslinked elastomer as defined above,
- optionally, from 0.2% to 1% by weight of one or more olefinic polymer adjuvant(s) as defined above, and
- optionally, from 0.5% to 2.5% by weight of one or more additive(s) as defined above,
with respect to the total weight of the bituminous composition.

Typically, the bituminous composition comprises, in particular consists essentially of:
- from 85% to 95% by weight of bitumen,
- from 2.5% to 7.5% by weight of one or more crosslinked elastomer as defined above,
- optionally, from 0.4% to 0.8% by weight of one or more olefinic polymer adjuvant(s) as defined above, and
- optionally, from 0.5% to 2.5% by weight of one or more additive(s) as defined above,
with respect to the total weight of the bituminous composition.

Advantageously, the bituminous composition according to the invention has a softening point, determined according to standard EN 1427, superior or equal to 75°C, preferably ranging from 75°C to 100°C, more preferably from 75°C to 90°C.

Advantageously, the bituminous composition according to the invention has a penetrability at 25°C, determined according to standard EN 14276, inferior or equal to 100 1/10 mm, preferably ranging from 75 to 90 1/10 mm.

Advantageously, the bituminous composition according to the invention is stable during storage. In the context of the invention, by *"storage stable"* we designate that the composition may be stored at elevated temperature for a long period without gelling.

In particular, the bituminous composition according to the invention is stable after at least 7 days of storage, preferably after at least 14 days of storage, more preferably after at least 20 days of storage, typically after at least 28 days of storage, at 180°C, preferably at 200°C.

The storage stability of the bituminous composition may be measured according to any known method. For example it can be evaluated by letting a 1 kg tin of binder stand at a required temperature (typically, 180° C or 200°C). At each time of measurement, a wooden strip was dipped into the tin and the manner in which the binder flowed was examined. A scale from 0 to 4 allowed the state of the binder to be described.

S0: Binder fluid, flowed drop by drop.

S1: Binder liquid: flowed in a thin continuous thread

S2: Binder viscous: flowed in a wide continuous thread

S3: Binder highly viscous: flowed as a continuous sheet

S4: Binder solid.

We shall consider that a binder has gelled when it reaches state S3. One can then measure the storage time needed to reach this state.

### Preparation of a bituminous composition according to the invention

The bitumen/polymer compositions of the invention can be prepared by any method known to a person skilled in the art. As a general rule, these methods comprise the mixing of the components and the heating of the mixture. The bitumen can be heated before mixing. Usually, the bitumen is heated before mixing, and the other components are added to the bitumen without having been preheated.

According to a particular embodiment of the invention, a bitumen/polymer composition is prepared by bringing into contact:
- bitumen,
- at least one elastomer as defined above,
- optionally additives.

According to one embodiment of the invention, the operation is carried out at temperatures ranging from 120° C. to 200° C., preferably from 150° C. to 200° C., preferentially from 160° C. to 200° C., more preferably from 160° C. to 195° C., more preferably still from 160° C. to 180° C. This embodiment thus makes possible the preparation of the bitumen/polymer composition.

The operation is preferably carried out with stirring, advantageously for a period of time of at least 10 minutes, preferably of from 1 hour to 24 hours, more preferentially from 1 hour to 10 hours.

The method of the invention can be carried out by means of stirring producing high shear or stirring producing low shear. The method of the invention can comprise successive sequences with different stirring modes; for example, the method of the invention can comprise at least two successive stirring sequences, a first sequence producing high-shear stirring, followed by a second sequence producing low-shear stirring, preferably ranging from 400 revolutions/min to 1000 revolutions/min.

### Use of the bituminous compositions

Various uses of the bitumen/polymer compositions obtained according to the invention are envisaged. In particular, the bitumen/polymer compositions can be used for the preparation of a bitumen/polymer binder. The bitumen/polymer binder according to the invention can be employed in combination with aggregates, in particular road aggregates.

As regards the road applications, the invention is targeted notably at bituminous mixes as materials for the construction and maintenance of road foundations and their surfacing, and also for carrying out all road works.

The term "bituminous mix" is understood to mean a mixture of a bituminous binder with aggregates and optionally inorganic and/or synthetic fillers.

The bituminous mix comprises a bitumen/polymer binder according to the invention, and optionally inorganic and/or synthetic fillers, preferably chosen from fines, sand, gravel and recycled milled products. The aggregates are inorganic and/or synthetic aggregates, notably recycled milled products, with dimensions of greater than 2 mm, preferably of between 2 mm and 20 mm.

The bitumen/polymer binder according to the invention can advantageously be used to prepare a surface coating, a hot mix, a warm mix, a cold mix, a cold-poured mix or a grave emulsion.

As regards the road applications, the invention is also targeted at asphalts as materials for manufacturing and covering sidewalks.

The term "asphalt" is understood to mean a mixture of bituminous binder with inorganic and/or synthetic fillers.

An asphalt comprises a bitumen/polymer binder according to the invention and inorganic fillers, such as fines, sand or gravel, and/or synthetic fillers. The inorganic fillers consist of fines (particles with dimensions of less than 0.063 mm), of sand (particles with dimensions of between 0.063 mm and 2 mm) and optionally of gravel (particles with dimensions of greater than 2 mm, preferably of between 2 mm and 4 mm).

Asphalts exhibit a compactness of 100% and are mainly used to make and cover sidewalks, while mixes have a compactness of less than 100% and are used to make roads. Unlike mixes, asphalts are not compacted with a roller during their placement.

Another aspect of the invention is the use of a bitumen/polymer composition in various industrial applications, notably for preparing a leaktight coating, a membrane or a seal coat.

As regards the industrial applications of the bituminous compositions according to the invention, mention may be made of the manufacture of leaktight membranes, of noisereduction membranes, of insulating membranes, of surface coatings, of carpet tiles or of seal coats.

The invention is illustrated by the following examples, given without implied limitation.

### EXAMPLES:

In these examples, the parts and percentages are expressed by weight, unless otherwise indicated.

### 1. Materials and Methods

The rheological and mechanical characteristics of the bitumen and of the bituminous compositions to which reference is made in these examples are measured according to the methods indicated in table 1.

**Table 1**

| **Property** | **Abbreviation** | **Unit** | **Measurement method** |
|---|---|---|---|
| **Needle penetrability at 25°C** | P25 | 1/10 mm | BS EN 1426 |
| **Ring-and-ball softening point** | RBSP | °C | BS EN 1427 |
| **Dynamic viscosity** | Viscosity | cPs | BS EN 13302 |
| **Gelling** | Gelling | - | Protocol detailed hereafter |
| **Clumping sensibility** | Clumping | - | Protocol detailed hereafter |

The gelling test consisted in letting a 1 kg tin of binder stand at 180° C. At each time of measurement, a wooden strip was dipped into the tin and the manner in which the binder flowed was examined. A scale from 0 to 4 allowed the state of the binder to be described.

S0: Binder fluid, flowed drop by drop.

S1: Binder liquid: flowed in a thin continuous thread

S2: Binder viscous: flowed in a wide continuous thread

S3: Binder highly viscous: flowed as a continuous sheet

S4: Binder solid.

We shall consider that a binder has gelled when it reaches state S3. One can then measure the storage time needed to reach this state.

The ability of the composition to be subjected to *"clumping"* is evaluated visually by an operator. The bitumen/polymer composition is mixed with aggregates to form an asphalt mix. The resulting asphalt mix is then transported in a thermally insulated asphalt truck. Once at the arrival site, the presence of lumps in the asphalt composition is visually evaluated by the operator. A grade of "PASS" is assigned to samples free from any lumps whereas a grade of "FAIL" is assigned to samples comprising lumps.

Bitumen base: a bitumen base of 35/50 grade, denoted BO, having a penetrability P25 of 130 1/10 mm and an RBSP of 39-47°C and commercially available from TOTAL MARKETING SERVICES, is selected.

Polymer: a clear, radial tricblock copolymer based on styrene an butadiene with a polystyrene content of 23% by weight and commercially available from KRATON^{™} under the name D116 A is selected.

### Preparation of the bituminous compositions:

First, a concentrated bituminous composition was prepared according to the following protocol: The bitumen, polymer and sulphur are all added through a high shear mill into a mixer at 185°C. The mixer continuously low shears the material through paddle stirring for 4 hours maintaining 185°C before transfer to storage.

The final (diluted) composition is then prepared from the concentrated composition according to the following protocol: The concentrated composition is blended with pure bitumen to obtain the correct polymer content and penetration of material directly into a deliver tanker.

### 2. Preparation of the compositions

A concentrated composition C1 as defined Table 2 below is prepared according to the protocol detailed above. Final (diluted) compositions C2, C3 and C43 are prepared from the concentrated composition C1 according to the protocol detailed above.

**Table 2**

| | **C1 (concentrated)** | **C2² (diluted)** | **C3³ (diluted)** | **C4⁴ (diluted)** |
|---|---|---|---|---|
| **Bitumen** | 93.3 % | 94.54% | 94.54% | 94.54% |
| **Polymer** | 6.5 % | 5.3 % | 5.3 % | 5.3 % |
| **Crosslinking agent**¹ | 0.2 % | 0.16% | 0.16% | 0.16% |

| | | | | |
|---|---|---|---|---|
| ¹crosslinking agent comprising 63% by weight of Sulphur. ²Composition C2 is prepared from the concentrated composition C1 on the same day as the preparation of C1. ³Composition C3 is prepared from the concentrated composition C1 after 4 days of storage. ⁴Composition C4 is prepared from the concentrated composition C1 after 5 days of storage. | | | | |

### 3. Mechanical properties of the concentrated composition

The mechanical properties of the concentrated composition C1 were evaluated according to the protocol defined above.

The results are given in the following table 3.

**Table 3**

| | **C1 (concentrated)** | |
|---|---|---|
| **P25 (1/10 mm)** | 85 | |
| **RBSP (°C)** | 88,0 | |
| **Dynamic viscosity at 180°C (cPs)** | 582.4 | |
| *After 7 days of storage at 180°C* | | |

| | ***180°C*** | ***200°C*** |
|---|---|---|
| **State of gel** | S1 | S0 |
| **P25 (1/10mm)** | 91 | 108 |
| **RBSP (°C)** | 83.0 | 81.5 |
| **Dynamic Viscosity at 180°C (cPs)** | 611.2 | 566.4 |
| **Viscosity change at 180°C (%) **** | 4.9% | -2.7% |
| *After 28 days of storage at 180°C* | | |

| | ***180°C*** | ***200°C*** |
|---|---|---|
| **State of gel** | S1 | S0 |
| **P25 (1/10mm)** | 98 | 88 |
| **RBSP (°C)** | 86.5 | 84.0 |
| **Dynamic Viscosity at 180°C (cPs)** | 992 | 684.8 |
| **Viscosity change at 180°C (%) **** | 70.3% | 17.6% |
| **Clumping** | PASS | PASS |

| | | |
|---|---|---|
| **calculated as the ratio of the difference between the viscosity of the composition before storage and the viscosity after storage, to viscosity of the composition before storage | | |

It appears that the concentrated composition satisfies all the mechanical requirements, even after 28 days of storage at 180°C. The concentrated composition does not gel upon storage, notably after 28 days of storage at 180°C. Further, no problem of "clumping" is observed during the transportation of an asphalt composition prepared from the composition according to the invention.

### 4. Mechanical properties of the final (diluted) composition

The mechanical properties of the final (diluted) compositions C2, C3 and C4 were evaluated according to the protocol defined above.

The results are given in the following table 4.

**Table 4**

| | **C2** | **C3** | **C4** |
|---|---|---|---|
| **P25 (1/10 mm)** | 102 | 96 | 103 |
| **RBSP (°C)** | 79.6 | 76.6 | 75.8 |
| **Dynamic Viscosity at 180°C (cPs)** | 320.0 | 368.0 | 336.0 |

It appears that the final compositions obtained from the concentrated composition directly or after 4 or 5 days of storage satisfy all the mechanical requirements.

## Claims

1. A bituminous composition comprising a bitumen modified by a crosslinked elastomer, said elastomer being chosen from aromatic vinyl hydrocarbon and conjugated diene block copolymers having a vinyl aromatic hydrocarbon content, as determined by ¹³C NMR spectroscopy, inferior or equal to 25% by mass, with respect to the total mass of the elastomer.

2. The bituminous composition according to claim 1, comprising from 70% to 99.5% by weight of bitumen, preferably from 75% to 99% by weight, more preferably from 80% to 98%, even more preferably from 85% to 95% by weight, with respect to the total weight of the bituminous composition.

3. The bituminous composition according to claim 1 or 2, wherein the elastomer is chosen from aromatic monovinyl hydrocarbon and conjugated diene block copolymers, preferably from styrene and butadiene copolymers.

4. The bituminous composition according to any of claims 1 to 3, wherein the elastomer is chosen from styrene and butadiene triblock copolymers, more preferably from styrene and butadiene radial triblock copolymers.

5. The bituminous composition according to any of claims 1 to 4, wherein the elastomer represents from 0.5 to 20 % by weight, more preferentially from 1 to 15 % by weight, more preferentially from 2 to 10 % by weight, and more preferentially from 2,5 to 7,5 % by weight, of said bitumen/polymer composition.

6. The bituminous composition according to any of claims 1 to 5, wherein the elastomer has a monovinyl aromatic hydrocarbon content, as determined by 13C NMR spectroscopy, superior or equal to 5% by mass, preferably ranging from 10% to 25% by weight, more preferably from 20% to 25 % by mass, with respect to the total mass of the elastomer.

7. The bituminous composition according to any of the preceding claims, wherein the elastomer is sulphur-crosslinked and said bituminous composition has Sulphur content ranging from 0.06 % to 0.14% by weight, with respect to the total weight of the bituminous composition, preferably from 0.08 % to 0.12% by weight.

8. The bituminous composition according to any of the preceding claims, further comprising an olefinic polymer functionalized by at least one epoxy group, which, in particular, represents from 0.05% to 2.5% by weight, preferentially from 0.15% to 2% by weight, more preferentially still from 0.4% to 1% by weight, more preferentially still from 0.4% to 0.8% by weight, said olefinic polymer being preferentially selected from the group consisting of (a) ethylene/glycidyl (meth)acrylate copolymers; (b) ethylene/monomer A/monomer C terpolymers and (c) the mixtures of these copolymers ; in particular, the olefinic polymer is chosen from the groups (a), (b) and (c) consisting of:
(a) the copolymers of ethylene and glycidyl (meth) acrylate chosen from, preferably random copolymers, of ethylene and of a monomer selected from glycidyl acrylate and glycidyl methacrylate, comprising from 50 % to 99.7 % by weight, preferably from 60 % to 95 % by weight, more preferably from 60 % to 90 % by weight of ethylene ;
(b) the terpolymers, preferably random terpolymers, of ethylene, of a monomer A and of a monomer C chosen from random and block terpolymers; the monomer A being, preferentially, selected from vinyl acetate, (C1-C6)alkylacrylates and methacrylates and the monomer C being selected from glycidylacrylate and glycidylmethacrylate; in particular, the terpolymers ethylene/monomer A/monomer C comprise from 0.5 % to 40 % by weight, preferably from 5 to 35 % by weight, more preferably from 10 % to 30 % by weight of units resulting from monomer A and from 2.5 % to 15 % by weight of units resulting from monomer C, the rest being formed by units derived from the ethylene ;
(c) a mixture of two or more copolymers chosen from the categories (a) and (b).

9. The bituminous composition as claimed in any of the preceding claims, which is stable after at least 7 days of storage at 180°C, preferably after 28 days of storage at 180°C.

10. A method for preparing a bituminous composition as claimed in any of claims 1 to 9, said method comprising contacting between 120° C and 220°C: at least one bitumen, at least one aromatic monovinyl hydrocarbon and conjugated diene block copolymers, which has a monovinyl aromatic hydrocarbon content, as determined by ¹³C NMR spectroscopy, inferior or equal to 25% by mass, for a period of 30 minutes to 48 hours.

11. The method as claimed in claim 8, in which the operation is carried out at a temperature ranging from 160°C to 195°C.

12. An asphalt comprising a bituminous composition as claimed in any of claims 1 to 9 and inorganic and/or synthetic fillers.

13. A bituminous mix comprising a bituminous composition as claimed in any of claims 1 to 9, aggregates and optionally inorganic and/or synthetic fillers.
